# DEMANDE DE BREVET EUROPEEN

(11) **EP 4 737 783 A1**
(43) Date de publication de la demande: **06.05.2026**
(21) Numéro de dépôt: 25212097.7
(22) Date de dépôt: 29.10.2025
(51) Int. Cl.: F16L 37/12, F16L 37/14

(54) **RACCORD FLUIDIQUE POUR UN CIRCUIT DE FLUIDE**

(30) Priorité: 30.10.2024 FR 2411881
(71) Demandeur: HUTCHINSON, 75008 Paris (FR)
(72) Inventeur: THILLET, Antoine, 45220 MONTARGIS (FR); ESCURE, Steeven, 45370 AUVILLIERS EN GÂTINAIS (FR)
(74) Mandataire: Gevers & Orès

(57) **Abrégé**

Raccord fluidique pour un circuit de fluide, en particulier automobile, ce raccord comportant un embout mâle du type SAE et un embout femelle (18) comportant : - un corps (20) et - une unique épingle (22) montée à cheval sur le corps (20) et apte à retenir axialement l'embout mâle dans l'embout femelle, l'épingle (22) étant formée d'une seule pièce et comportant une première paire de pattes latérales (30) comportant à leurs extrémités libres des rampes (34) et des saillies de préhension (36) aptes à être manipulées par un opérateur afin de déplacer l'épingle (22), et une seconde paire de pattes latérales (40) comportant à leurs extrémités libres des premières dents (42) orientées parallèlement à l'axe (A) et aptes à coopérer avec des secondes dents (44) complémentaires du corps (20).

## Description

### Domaine technique de l'invention

L'invention concerne un raccord fluidique pour un circuit de fluide, en particulier automobile.

### Arrière-plan technique

Un circuit de fluide, en particulier automobile, peut comprendre plusieurs raccords fluidiques permettant de raccorder des tronçons du circuit entre eux ou des équipements au reste du circuit.

Ces raccords sont en général des raccords « rapides » (de l'anglais *Quick Connect* ou QC) qui ont l'avantage de permettre un raccordement fluidique rapide entre deux éléments à raccorder. Ce raccordement est en général réalisé manuellement.

De manière classique, un raccord fluidique comprend un embout mâle et un embout femelle, l'embout mâle étant engagé dans l'embout femelle.

Parmi les types de QC et raccords connus, il existe les technologies VDA et SAE. La présente invention concerne la technologie SAE qui se caractérise par un embout mâle qui comporte une nervure annulaire externe.

Pour assurer la rétention de l'embout mâle dans l'embout femelle, il est connu de monter des épingles ou verrous sur l'embout femelle, une première de ces épingles étant configurée pour coopérer avec la nervure de l'embout mâle pour assurer sa retenue dans l'embout femelle, et une seconde de ces épingles étant en général configurée pour verrouiller la première épingle dans sa position de retenue de l'embout mâle ou pour confirmer que la première épingle est correctement verrouillée.

La présente invention propose un perfectionnement à cette technologie qui permet notamment de simplifier la fabrication du raccord fluidique tout en conservant au moins certaines fonctions évoquées plus haut (coopération avec la nervure de l'embout, verrouillage, témoin de bon positionnement, etc.).

### Résumé de l'invention

La présente invention concerne un raccord fluidique pour un circuit de fluide, en particulier automobile, ce raccord comportant un embout mâle du type SAE comportant une nervure annulaire externe, et un embout femelle apte à recevoir l'embout mâle, l'embout femelle comportant :
- un corps comportant un passage interne de fluide s'étendant depuis une entrée jusqu'à une sortie, ledit passage étant apte à recevoir l'embout mâle par engagement depuis l'entrée le long d'un axe, et
- une unique épingle montée à cheval sur le corps et apte à retenir axialement l'embout mâle dans le passage du corps,

l'épingle étant formée d'une seule pièce et étant mobile dans un plan perpendiculaire à l'axe depuis une position haute de libération de l'embout mâle jusqu'à une position basse de retenue de l'embout mâle,
l'épingle comportant une première paire de pattes latérales qui sont situées de part et d'autre dudit axe et qui s'étendent parallèlement au plan depuis une partie médiane de l'épingle, les pattes de la première paire comportant à leurs extrémités libres opposées à la partie médiane des rampes sur lesquelles la nervure de l'embout mâle est apte à prendre appui lorsque l'épingle est en position haute et lors de l'engagement de l'embout mâle dans l'embout femelle, afin d'écarter élastiquement ces pattes l'une de l'autre, les pattes de la première paire étant aptes à coopérer par appui axial avec la nervure de l'embout mâle lorsque l'épingle est en position basse, pour retenir axialement l'embout mâle dans l'embout femelle, les pattes de la première paire comportant en outre à leurs extrémités libres des saillies de préhension aptes à être manipulées par un opérateur afin de déplacer l'épingle de sa position basse à sa position haute, l'épingle comportant en outre une seconde paire de pattes latérales qui sont situées de part et d'autre dudit axe et qui s'étendent parallèlement au plan depuis la partie médiane de l'épingle et à distance axiale des pattes de la première paire, les pattes de la seconde paire étant situées entre les pattes de la première paire et ladite entrée et comportant à leurs extrémités libres opposées à la partie médiane des premières dents qui sont orientées parallèlement à l'axe du côté opposé à la première paire de pattes et qui sont aptes à coopérer par appui avec des secondes dents complémentaires du corps afin de définir ladite position haute et éviter que l'épingle se désolidarise accidentellement du corps.

Une première particularité du raccord fluidique selon l'invention est liée au fait qu'il comprend une seule épingle ou un seul verrou contre au moins deux en général dans la technique antérieure.

Une autre particularité de l'invention est liée au fait que l'épingle comprend deux paires de pattes ayant des fonctions différentes.

Les pattes de la première paire sont configurées pour coopérer par encliquetage élastique avec la nervure de l'embout mâle pour retenir l'embout mâle dans l'embout femelle. Les pattes de la première paire de pattes comportent en outre des saillies de préhension qui permettent manuellement à un opérateur de déplacer l'épingle de sa position basse à sa position haute. L'épingle peut alors se déplacer de sa position haute à sa position basse. Le déplacement est de préférence automatique. En ce qui concerne le démontage, à savoir le déplacement de l'épingle de sa position basse à sa position haute, l'opération peut se faire manuellement ou au moyen d'un outil par exemple.

Les dents de la seconde paire de pattes ont pour fonction de coopérer avec l'embout femelle, en particulier lorsque l'épingle est en position haute, pour rendre l'épingle imperdable.

Le raccord selon l'invention peut comprendre une ou plusieurs des caractéristiques suivantes, prises isolément les unes avec les autres ou en combinaison les unes avec les autres :
- les pattes de la première paire ont une capacité de déformation élastique en flexion autour d'axes parallèles à l'axe précité, qui est supérieure à celle des pattes de la seconde paire ;
- les pattes de la première paire ont au niveau de leur raccordement à la partie médiane, une épaisseur radiale qui représente moins de la moitié voire moins d'un tiers d'une épaisseur radiale des pattes de la seconde paire au niveau de leur raccordement à la partie médiane, les épaisseurs radiales étant mesurées par rapport à l'axe précité ;
- chacune des premières dents comprend une face supérieure plane d'appui sur une face inférieure plane de chacune des secondes dents, les faces supérieures des dents de la première paire de pattes étant situées dans un même plan parallèle à l'axe ;
- les premières dents sont en saillie sur une face d'extrémité de l'épingle qui s'étend sur les pattes de la seconde paire jusqu'à la partie médiane ;
- un bossage est en saillie sur la face d'extrémité, ce bossage définissant deux bords latéraux de guidage qui sont situés de part et d'autre dudit axe et qui sont aptes à coopérer par coulissement avec des pistes complémentaires du corps lors du déplacement de l'épingle entre ses positions haute et basse ;
- les pattes de la première paire comportent deux premiers crochets qui sont orientés radialement vers l'axe et qui sont aptes à coopérer par appui avec des seconds crochets ou des encoches complémentaires du corps afin d'éviter que l'épingle se déplace de sa position haute à sa position basse sans que les pattes de la première paire soient écartées l'une de l'autre par la nervure de l'embout mâle ;
- les premiers crochets sont situés axialement juste en arrière des rampes par rapport à la direction d'engagement de l'embout mâle dans l'embout femelle ;
- les premiers crochets sont situés au niveau des saillies de préhension ;
- les saillies de préhension définissent une largeur maximale de l'épingle ;
- les pattes de la seconde paire comprennent respectivement deux premiers bords incurvés concaves ayant un diamètre supérieur ou égal à un diamètre externe de la nervure de l'embout mâle, et deux seconds bords incurvés convexes ayant un diamètre inférieur à ce diamètre externe, les premiers bords étant centrés sur l'axe lorsque l'épingle est en position haute, et les seconds bords étant centrés sur l'axe lorsque l'épingle est en position basse ;
- les seconds bords sont surépaissis axialement par rapport aux premiers bords pour former des saillies axiales du côté des pattes de la première paire ;
- l'épingle comprend au moins un élément d'indexage et/ou de guidage apte à coopérer par complémentarité de formes avec un élément complémentaire du corps ;
- le corps comprend un tronçon tubulaire et un anneau, l'anneau étant coaxial au tronçon tubulaire et relié au tronçon tubulaire par deux ponts de matière parallèles à l'axe et diamétralement opposés par rapport à cet axe, l'épingle étant monté à cheval de part et d'autre des deux ponts de matière ;
- le corps est en deux morceaux ou plus, entre lesquels est monté au moins un joint d'étanchéité apte à coopérer avec ledit embout mâle ;
- le corps est monobloc ou formé d'une seule pièce ;
- l'épingle comprend une saillie qui est située en regard d'un creux de forme complémentaire dudit corps, cette saillie étant apte à être à distance du creux lorsque l'épingle est dans sa position basse en l'absence d'effort axial appliqué sur l'épingle, et étant apte à être engagée dans le creux lorsque l'épingle est dans sa position basse en présence d'un effort axial appliqué sur l'épingle ; cet effort axial correspond par exemple à un effort du fluide circulant dans le raccord fluidique en fonctionnement.

### Brève description des figures

D'autres caractéristiques et avantages ressortiront de la description qui suit de modes de réalisation non limitatifs de l'invention en référence aux dessins annexés sur lesquels :
la figure 1 est une vue schématique en perspective d'un raccord fluidique selon un mode de réalisation de l'invention ;
la figure 2 est une vue schématique en perspective d'un embout femelle du raccord fluidique de la figure 1 ;
la figure 3 est une vue schématique de côté d'un corps du raccord fluidique de la figure 1 ;
les figures 4a-4b sont des vues schématiques en perspective et en coupe du corps de la figure 3 ;
les figures 5a-5b sont des vues schématiques en perspective d'une épingle du raccord fluidique de la figure 1 ;
la figure 6a-6b sont d'autres vues schématiques en perspective de l'épingle des figures 5a-5b ;
la figure 7 est une vue schématique en coupe axiale de l'embout femelle du raccord fluidique de la figure 1 ;
la figure 8a-8b sont d'autres vues schématiques en coupe transversale de l'embout femelle du raccord fluidique de la figure 1 ;
la figure 9 est une vue similaire à celle de la figure 7 et montre une étape d'insertion d'un embout mâle dans l'embout femelle ;
la figure 10 est une vue similaire à celles des figures 8a-8b et montre une étape d'insertion d'un embout mâle dans l'embout femelle ;
la figure 11 est une vue similaire à celle de la figure 7 et montre l'épingle dans une position basse, l'épingle étant dans une position haute à la figure 7 ;
la figure 12 est une vue similaire à celles des figures 8a-8b et montre l'épingle dans la position basse, l'épingle étant dans la position haute aux figures 8a-8b ;
la figure 13 est une vue schématique en perspective d'une épingle selon une variante de réalisation d'un raccord fluidique selon l'invention ;
la figure 14 est une vue schématique en perspective d'une corps d'embout femelle selon la variante de réalisation de la figure 13 ;
la figure 15 est une vue schématique en perspective et en coupe de l'embout femelle de la variante de réalisation de la figure 13 ;
la figure 16 est une vue schématique en perspective d'une variante de réalisation de l'épingle ;
la figure 17 est une vue schématique en perspective d'une variante de réalisation du corps de l'embout femelle ; et
la figure 18 est une vue schématique en coupe axiale des variantes de réalisation des figures 16 et 17, l'épingle étant dans sa position basse.

### Description détaillée de l'invention

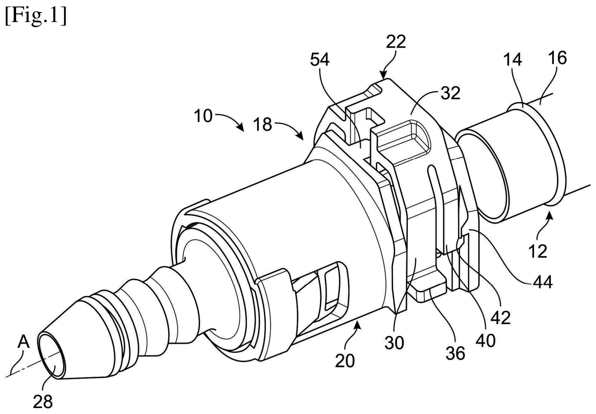

La figure 1 montre un mode de réalisation d'un raccord fluidique 10 selon l'invention.

Le raccord 10 est particulièrement adapté pour une utilisation dans un circuit de fluide, en particulier automobile, tel qu'un circuit de climatisation ou de refroidissement par exemple.

Le raccord 10 comporte un embout mâle 12 du type SAE comportant une nervure annulaire externe 14. De manière connue, un tel embout 12 a une forme générale tubulaire et comprend une surface cylindrique externe 16 sur laquelle la nervure 14 est en saillie.

Le raccord 10 comprend un embout femelle 18 apte à recevoir l'embout mâle 12.

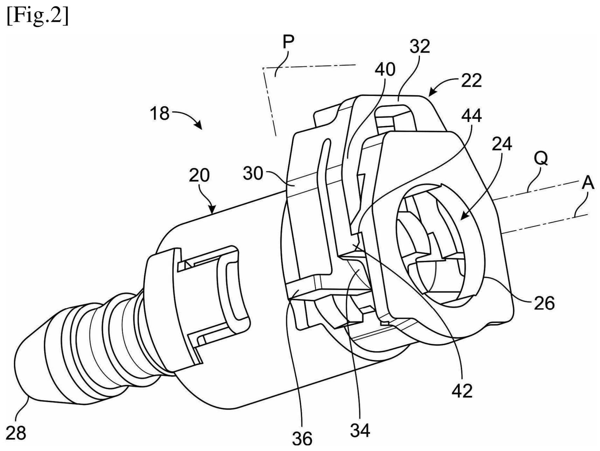

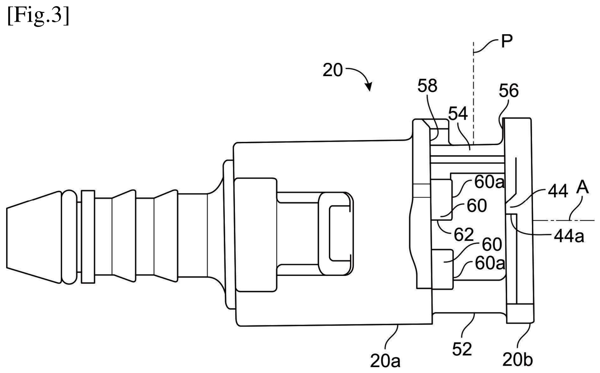

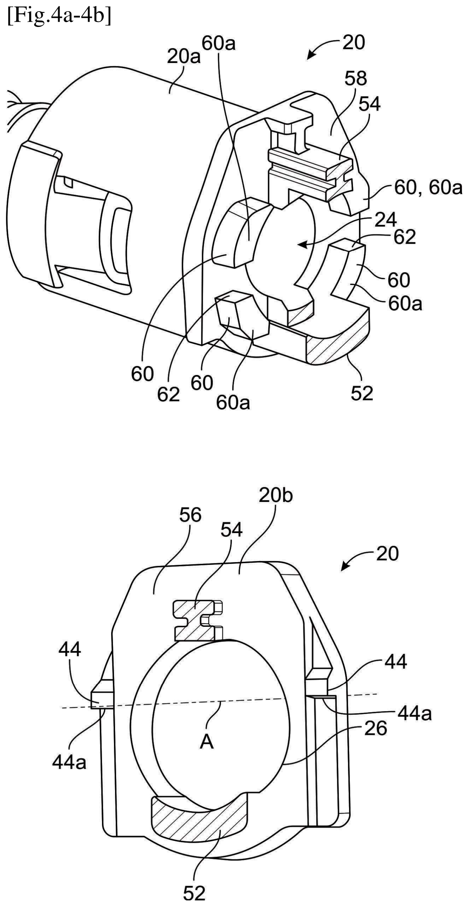

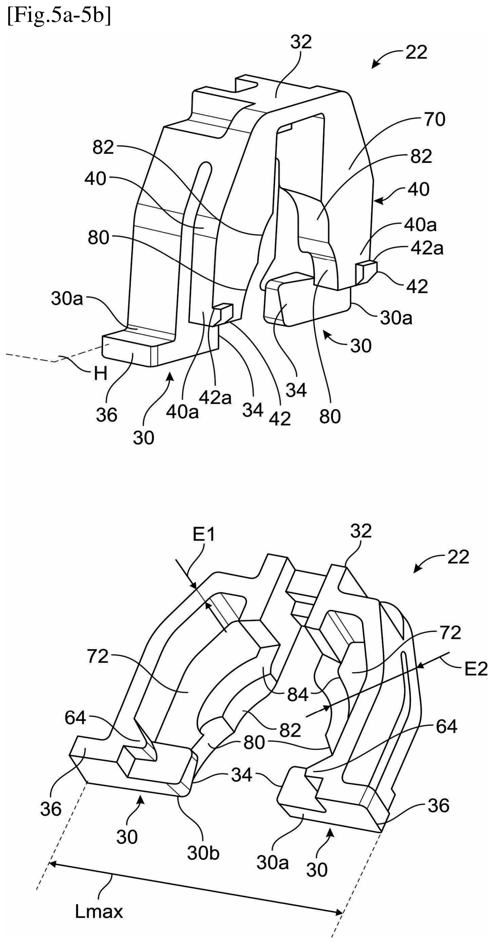

L'embout femelle 18 comporte un corps 20 et une unique épingle 22. L'embout femelle 18 est montré seul à la figure 2. Le corps 20 est montré seul aux figures 3 et 4a-4b et l'épingle 22 est montrée seule aux figures 5a à 6b.

Le corps 20 comporte un passage interne de fluide 24 s'étendant depuis une entrée 26 jusqu'à une sortie 28. Dans l'exemple représenté, l'entrée 26 et la sortie 28 sont coaxiales.

Le passage 24 est apte à recevoir l'embout mâle 12 par engagement depuis l'entrée 26 le long d'un axe A.

L'épingle 22 est montée à cheval sur le corps 20 et est apte à retenir axialement l'embout mâle 12 dans le passage 24 du corps 20.

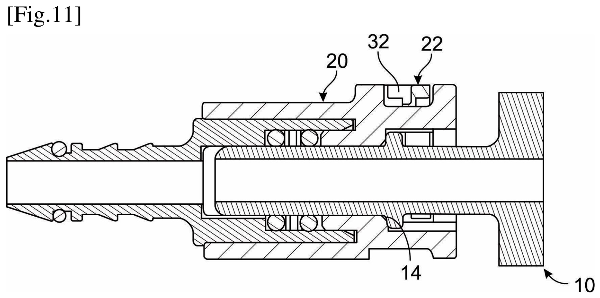

L'épingle 22 est formée d'une seule pièce et est mobile dans un plan perpendiculaire à l'axe A depuis une position haute de libération de l'embout mâle 12, visible aux figures 1, 2, 7, 8a-8b, 9, 10, jusqu'à une position basse de retenue de l'embout mâle 12, visible aux figures 11, 12 et 18.

L'épingle 22 comporte une première paire de pattes latérales 30 qui sont situées de part et d'autre de l'axe A et qui s'étendent parallèlement au plan P depuis une partie médiane 32 de l'épingle 22.

Les pattes 30 de la première paire comportent à leurs extrémités libres 30a opposées à la partie médiane 32 des rampes 34 sur lesquelles la nervure 14 de l'embout mâle 12 est apte à prendre appui, en particulier lorsque l'épingle est en position haute, lors de l'engagement de l'embout mâle 12 dans l'embout femelle 18, afin d'écarter élastiquement ces pattes 30 l'une de l'autre.

Les pattes 30 comportent en outre à leurs extrémités libres 30a des saillies de préhension 36 aptes à être manipulées par un opérateur afin de déplacer l'épingle 22 de sa position basse à sa position haute.

L'épingle 22 comporte en outre une seconde paire de pattes latérales 40 qui sont situées de part et d'autre de l'axe A et qui s'étendent parallèlement au plan P depuis la partie médiane 32 de l'épingle 22 et à distance axiale des pattes 30.

Les pattes 40 sont situées entre les pattes 30 et l'entrée 26 et comporte à leurs extrémités libres 40a opposées à la partie médiane 32 des premières dents 42 qui sont orientées parallèlement à l'axe A du côté opposé aux pattes 30.

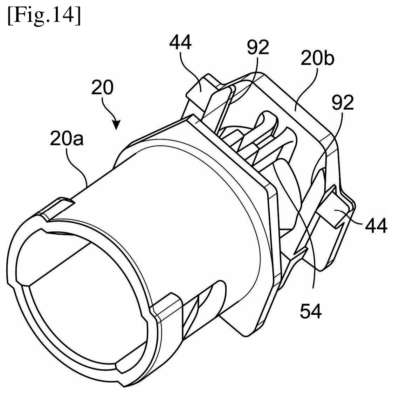

Les dents 42 sont aptes à coopérer par appui avec des secondes dents 44 complémentaires du corps 20 afin de définir la position haute et éviter que l'épingle 22 se désolidarise accidentellement du corps 20. Les dents 44 sont visibles aux figures 1, 2, 3, 4b et 14 notamment.

Les pattes 40 sont aptes à coopérer par appui axial avec la nervure 14 de l'embout mâle 12 lorsque l'épingle 22 est en position basse, pour retenir axialement l'embout mâle 12 dans l'embout femelle 18.

Nous allons maintenant décrire plus en détail le mode de réalisation illustré aux figures 1 à 12 ainsi que son fonctionnement.

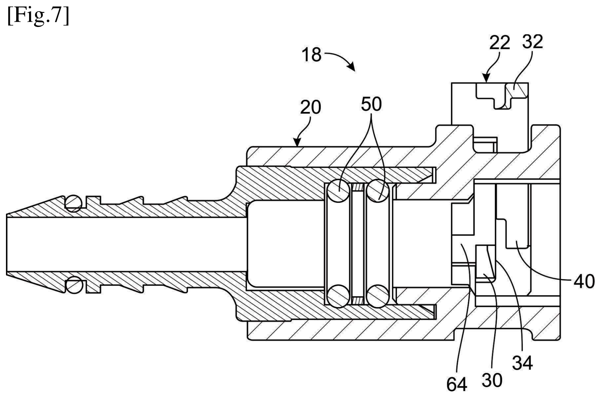

Le corps 20 de l'embout femelle 18 est formé par l'assemblage de deux morceaux ou plus dans l'exemple représenté, entre lesquels est monté au moins un joint d'étanchéité 50 apte à coopérer avec l'embout mâle 12 et en particulier sa surface externe 16 (figures 1 et 7). En variante, le corps 20 pourrait être monobloc et donc formé d'une seule pièce.

Comme illustré aux figures 4a et 4b, le corps 20 comprend un tronçon tubulaire 20a et un anneau 20b relié au tronçon 20a.

L'anneau 20b est coaxial au tronçon 20a et relié au tronçon 20a par deux ponts de matière 52, 54 parallèles à l'axe A et diamétralement opposés par rapport à cet axe A.

C'est l'anneau 20b qui définit l'entrée 26 précitée dans l'exemple représenté. Les dents 44 peuvent être en saillie sur une face 56 de l'anneau, ou dans des évidements de cette face 56 de l'anneau (figure 4b). La face 56 est perpendiculaire à l'axe A et est orientée du côté du tronçon 20a.

Les ponts de matière 52, 54 s'étendent depuis l'anneau 20b en étant reliée à cette face 56.

De la même façon, le tronçon 20a comprend une face 58 perpendiculaire à l'axe A et qui est en regard de la face 56 de l'anneau 20b. Les ponts de matière 52, 54 sont reliées à cette face 58.

La face 58 comprend en outre deux saillies 60 qui sont disposées de part et d'autre de l'axe A, et entre les ponts de matière 52, 54. Chacune de ces saillies 60 comprend une encoche 62 sensiblement en son milieu qui a une orientation radiale vis-à-vis de l'axe A.

Les encoches 62 peuvent être considérées comme formant des logements de réception de dents 64 des pattes 30, ou bien définissant des crochets aptes à coopérer avec des dents 64 des pattes 30.

Chacune des saillies 60 comprend une face 60a en regard de la face 56 et séparée de cette face 56 par une distance axiale prédéterminée (figure 3).

Les faces 56, 58, 60a servent à guider l'épingle 22 lors de son déplacement dans le plan P.

Dans l'exemple représenté, si on considère que les ponts de matière 54, 52 sont respectivement situés en haut et en bas par rapport à l'axe A et du passage 24, alors les saillies 60 sont situées à gauche et à droite de l'axe A et du passage 24.

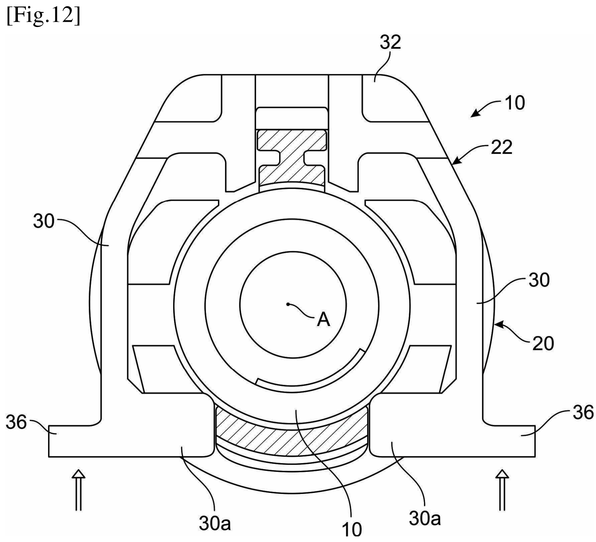

L'épingle 22 est monté à cheval de part et d'autre des ponts de matière 54, 52, en particulier lorsqu'elle est en position basse illustrée à la figure 12.

Les pattes 30 de l'épingle 22 ont une capacité de déformation élastique en flexion autour d'axes parallèles à l'axe A, qui est supérieure à celle des pattes 40. Autrement dit, les pattes 30 sont plus souples et plus flexibles que les pattes 40.

En pratique, les pattes 30 peuvent avoir au niveau de leur raccordement à la partie médiane 32, une épaisseur radiale E1 (vis-à-vis de l'axe A) qui représente moins de la moitié voire moins d'un tiers d'une épaisseur radiale E2 (vis-à-vis de l'axe A) des pattes 40 au niveau de leur raccordement à la partie médiane 32, comme cela est visible à la figure 5b notamment.

Les pattes 30 comportent de préférence deux premiers crochets 64 qui sont orientés radialement vers l'axe A (figure 5b).

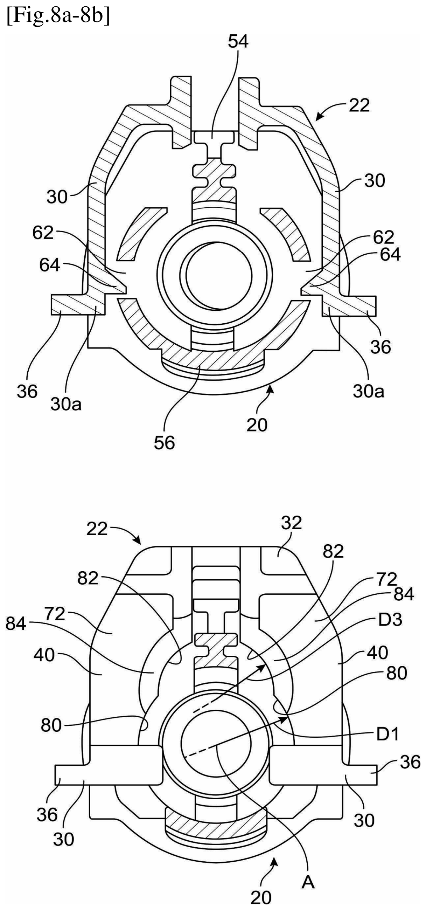

Les crochets 64 sont aptes à coopérer par engagement et/ou appui avec les encoches 62 (ou les dents définies par ces encoches) du corps 20, comme cela est visible à la figure 8a, afin d'éviter que l'épingle 22 se déplace de sa position haute à sa position basse sans que les pattes 30 soient écartées l'une de l'autre par la nervure 14 de l'embout mâle 12.

Ces crochets 64 peuvent être situés axialement juste en arrière des rampes 34 par rapport à la direction d'engagement de l'embout mâle 12 dans l'embout femelle 16, comme cela est visible aux figures 5b et 6b.

Les premiers crochets 64 peuvent être situés au niveau des saillies de préhension 36, comme cela est visible dans les mêmes figures.

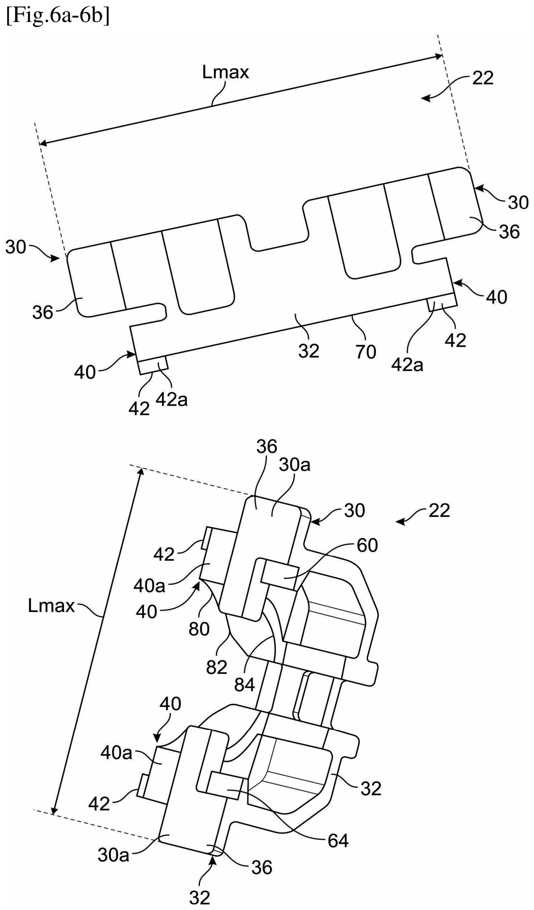

On voit en outre dans les figures 6a et 6b que les saillies 36 définissent une largeur maximale Lmax de l'épingle 22, ce qui facilite leur préhension manuelle.

Les premières dents 42 des pattes 40 comprennent chacune une face supérieure plane 42a d'appui sur une face inférieure 44a plane de chacune des secondes dents 44 du corps 20 (figures 5a et 4b). Les faces 42a, 44a peuvent être parallèles à l'axe A pour le corps 20 (et à l'axe Q pour l'épingle 22) ou bien inclinées par rapport à cet axe en particulier pour améliorer la retenue de l'épingle 22.

Les faces supérieures 42a des dents 42 sont de préférence situées dans un même plan H parallèle à l'axe A. On comprend donc que les faces inférieures 44a des dents 44 sont situées dans ce plan H lorsque l'épingle 22 est en position haute et que les faces 42a, 44a sont en appui les unes sur les autres (figure 2).

On voit aux figures 5a et 6a notamment que les premières dents 42 sont en saillie sur une face d'extrémité 70 de l'épingle 22 qui s'étend sur les pattes 40 jusqu'à la partie médiane 32.

En position de montage de l'épingle 22 dans le corps 20, la face 70 est en regard de la face 56 précitée de l'anneau 20b.

L'épingle 22 comprend une face 72, opposée à la face 70, et qui s'étend également sur les pattes et jusqu'à la partie médiane 32 (figure 5b). Cette face 72 est ainsi située du côté des pattes 40.

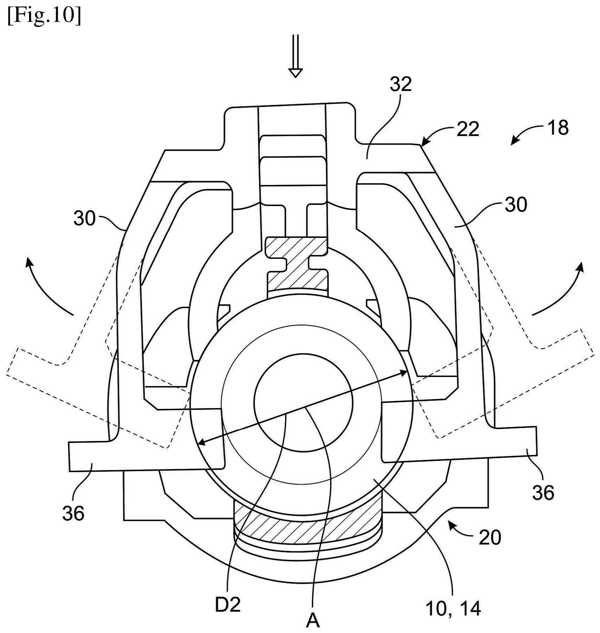

Sur les figures 5a, 5b et 8b, on voit que les pattes 40 peuvent comprendre respectivement deux premiers bords incurvés 80 concaves ayant un diamètre D1 supérieur ou égal à un diamètre externe D2 de la nervure 14 de l'embout mâle 12 (figures 8b et 10).

Les pattes 40 peuvent en outre comprendre respectivement deux seconds bords incurvés 82 concaves ayant un diamètre D3 inférieur à ce diamètre externe D2 (figures 8b et 10).

Comme on le voit à la figure 8b, les bords 80 sont centrés sur l'axe A lorsque l'épingle 22 est en position haute, et les seconds bords 82 sont destinées à être centrés sur l'axe A lorsque l'épingle 22 est en position basse.

On voit en outre aux figures 5b et 8b que les seconds bords 82 sont surépaissis axialement par rapport aux premiers bords pour former des saillies axiales 84 du côté des pattes 30.

Les pattes 40 sont aptes à coopérer par appui axial des saillies 84 avec la nervure 14 de l'embout mâle 12 lorsque l'épingle 22 est en position basse, pour retenir axialement l'embout mâle 12 dans l'embout femelle 18.

Lorsque l'épingle 22 est en position haute, l'embout mâle 12 peut être engagé dans l'embout femelle 18 en passant entre les pattes 30, en particulier au niveau des bords 80. Lorsque l'épingle 22 est en position basse, l'embout mâle 12 est retenu axialement par les pattes 30 et sa nervure 14 prend appui axialem
ent sur les saillies 84 des bords 82.

On va maintenant décrire d'autres aspects du fonctionnement du raccord 10 en référence aux figures 7 à 12.

Les figures 7 et 8a-8b montrent l'embout femelle 18 avec l'épingle 22 en position haute. Dans cette position, les crochets 64 sont engagées dans les encoches 62 (figure 8a), ce qui empêche de pouvoir déplacer l'épingle de sa positon haute à sa position basse sans que l'embout mâle 12 soit engagé dans l'embout femelle 18. Dans cette position toujours, les dents 42 coopèrent par appui avec les dents 44, dans le plan H précité, pour empêcher que l'épingle 22 se désolidarise du corps 20 (figures 1 et 2). L'épingle 22 est alors verrouillée sur le corps 20.

Les figures 1, 9 et 10 montrent l'engagement de l'embout mâle 12 dans l'embout femelle 18. L'embout 12 est aligné sur l'axe A et engagé dans le passage 24 à travers l'entrée 26.

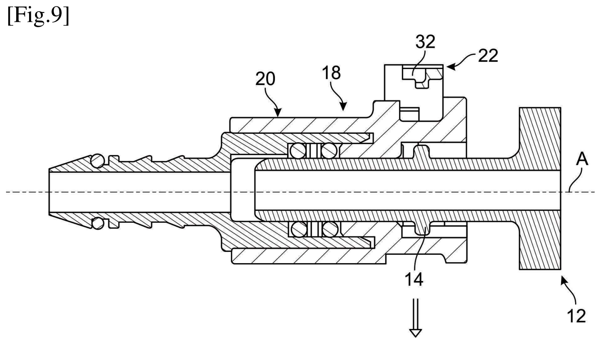

Cet engagement est poursuivi jusqu'à ce que la nervure 14 de l'embout 12 prenne appui axialement sur les rampes 34 des pattes 30 qui vont alors se déformer élastiquement en s'écartant l'une de l'autre, radialement vers l'extérieur vis-à-vis de l'axe A (figures 9 et 10). La figure 10 montre en traits pointillés les positions déformées (exagérées pour améliorer la clarté et la compréhension) des pattes 30 lorsqu'elles prennent appui radialement sur la périphérie externe de la nervure 14.

Dans la mesure où les crochets 64 sont sur les pattes 30 déformées, ces crochets 64 sont délogés des encoches 62 lorsque les pattes 30 sont dans cet état déformé. L'épingle 22 n'est alors plus empêchée d'être déplacée de sa position haute à sa position basse.

L'épingle 22 peut ainsi se déplacer automatiquement de sa position haute à sa position basse grâce à l'élasticité des pattes 30 qui reprennent leur forme initiale, comme illustré par les flèches aux figures 9 et 10. La seule coopération des extrémités libres 30a des pattes 30 avec la nervure 14 de de l'embout 12 peut suffire à ce que le pattes 30 glissent sur la nervure 14 en entrainant dans leur course l'épingle 22 de sa position haute à sa position basse.

L'épingle 22 peut comprendre au moins un élément d'indexage et/ou de guidage apte à coopérer par complémentarité de formes avec un élément complémentaire du corps 20 pour éviter un mauvais montage et guider ce montage. Dans l'exemple représenté, cet élément peut être formé ou porté par la partie médiane 32 qui a une forme spécifique complémentaire au corps 20. La figure 1 montre par exemple que la partie médiane 32 a une forme complémentaire au pont de matière 54 si bien que l'épingle 22 ne peut être montée que d'une seule façon sur le corps 20.

Les figures 11 et 12 montrent l'épingle 22 dans sa position basse dans laquelle les pattes 30 ont retrouvé une position sans contrainte. Dans cette position, les extrémités 30a des pattes 30 coopèrent de préférence avec le corps 20 pour assurer une certaine retenue de l'épingle 22 dans cette position.

Il suffit toutefois à un opérateur d'exercer une force d'appui sur les saillies de préhension 36, comme représenté par les flèches à la figure 12, pour déplacer l'épingle de sa position basse à sa position haute, et ainsi permettre de retirer l'embout mâle 12 de l'embout femelle 18.

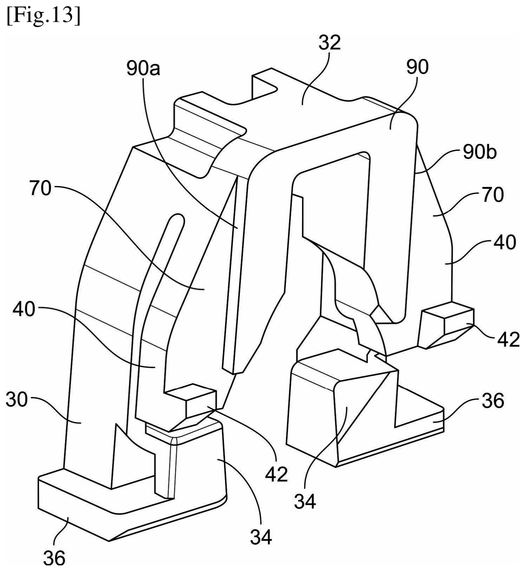

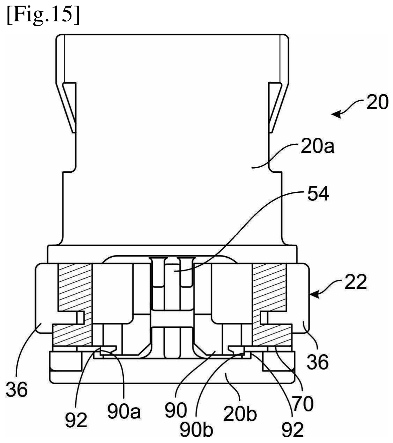

Les figures 13 à 15 représentent une variante de réalisation du raccord fluidique 10 qui diffère de celui précédemment décrit essentiellement en ce que la face d'extrémité 70 comprend un bossage 90 en saillie.

Ce bossage 90 définit deux bords latéraux 90a, 90b de guidage qui sont situés de part et d'autre de l'axe A et qui sont aptes à coopérer par coulissement avec des pistes 92 complémentaires du corps 20 lors du déplacement de l'épingle 22 entre ses positions haute et basse.

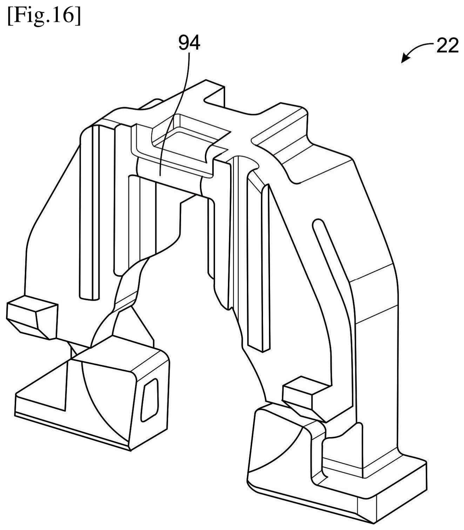

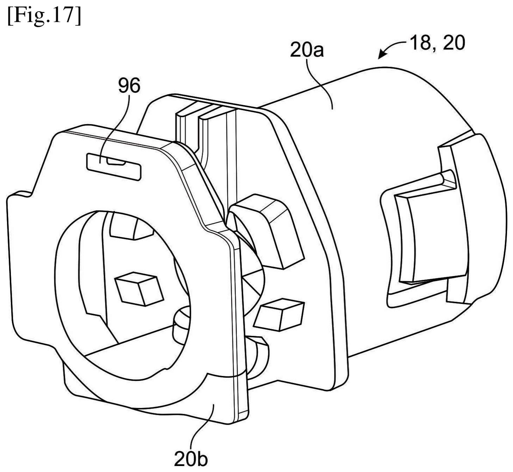

Les figures 16 à 18 illustrent une autre variante de réalisation qui diffère des précédents modes de réalisation essentiellement en ce que l'épingle 22 comprend une saillie 94 qui est située en regard d'un creux 96 de forme complémentaire du corps 20.

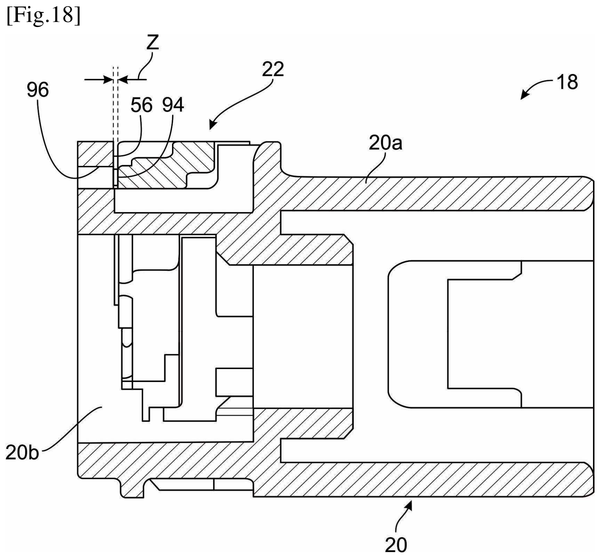

La saillie 94 est apte à être à distance du creux 96 (jeu axial Z à la figure 18) lorsque l'épingle 22 est dans sa position basse en l'absence d'effort axial appliqué sur l'épingle 22.

La saillie 94 est en outre apte à être engagée dans le creux 96 lorsque l'épingle 22 est dans sa position basse en présence d'un effort axial appliqué sur l'épingle 22.

Dans l'exemple représenté, la saillie 94 est située sur la partie médiane 32, par exemple sur la face 70 précitée ou le bossage 90 précité. La saillie 94 a par exemple une forme allongée en direction transversale.

Le creux 96 est ici situé sur l'anneau 20b du corps 20 et peut se présenter sous la forme d'une fente ou encoche traversante comme dans l'exemple représenté. Le creux 96 a par exemple une forme allongée en direction transversale.

En fonctionnement, le fluide qui circule dans le raccord 10 applique un effort axial sur l'embout mâle 12 qui applique à son tour un effort axial sur l'épingle 22, qui se retrouve alors plaquer contre la face 56 précitée. La saillie 94 est alors engagée dans le creux 96 pour supprimer une quelconque remontée de l'épingle 22 sous contrainte de la pression du fluide.

En variante, la saillie pour être située sur le corps 20 et le creux correspondant pourrait être situé sur l'épingle 22.

## Revendications

1. Raccord fluidique (10) pour un circuit de fluide, en particulier automobile, ce raccord (10) comportant un embout mâle (12) du type SAE comportant une nervure annulaire externe (14), et un embout femelle (18) apte à recevoir l'embout mâle (12), l'embout femelle (18) comportant :
- un corps (20) comportant un passage interne de fluide (22) s'étendant depuis une entrée (26) jusqu'à une sortie (28), ledit passage (24) étant apte à recevoir l'embout mâle (12) par engagement depuis l'entrée le long d'un axe (A), et
- une unique épingle (22) montée à cheval sur le corps (20) et apte à retenir axialement l'embout mâle (12) dans le passage (24) du corps (20), l'épingle (22) étant formée d'une seule pièce et étant mobile dans un plan (P) perpendiculaire à l'axe (A) depuis une position haute de libération de l'embout mâle (12) jusqu'à une position basse de retenue de l'embout mâle (12),
l'épingle (22) comportant une première paire de pattes latérales (30) qui sont situées de part et d'autre dudit axe (A) et qui s'étendent parallèlement au plan (P) depuis une partie médiane (32) de l'épingle (22), les pattes (30) de la première paire comportant à leurs extrémités libres (30a) opposées à la partie médiane (32) des rampes (34) sur lesquelles la nervure (14) de l'embout mâle (12) est apte à prendre appui lorsque l'épingle (22) est en position haute et lors de l'engagement de l'embout mâle (12) dans l'embout femelle (18), afin d'écarter élastiquement ces pattes (30) l'une de l'autre, les pattes (30) de la première paire étant aptes à coopérer par appui axial avec la nervure (14) de l'embout mâle(12) lorsque l'épingle (22) est en position basse, pour retenir axialement l'embout mâle (12) dans l'embout femelle (18), les pattes (30) de la première paire comportant en outre à leurs extrémités libres (30a) des saillies de préhension (36) aptes à être manipulées par un opérateur afin de déplacer l'épingle (22) de sa position basse à sa position haute, l'épingle (22) comportant en outre une seconde paire de pattes latérales (40) qui sont situées de part et d'autre dudit axe (A) et qui s'étendent parallèlement au plan (P) depuis la partie médiane (32) de l'épingle (22) et à distance axiale des pattes (30) de la première paire, les pattes (40) de la seconde paire étant situées entre les pattes (30) de la première paire et ladite entrée (26) et comportant à leurs extrémités libres (40a) opposées à la partie médiane (32) des premières dents (42) qui sont orientées parallèlement à l'axe (A) du côté opposé à la première paire de pattes (30) et qui sont aptes à coopérer par appui avec des secondes dents (44) complémentaires du corps (20) afin de définir ladite position haute et éviter que l'épingle (22) se désolidarise accidentellement du corps (20).

2. Raccord (10) selon la revendication 1, dans lequel les pattes (30) de la première paire ont une capacité de déformation élastique en flexion autour d'axes parallèles à l'axe (A) précité, qui est supérieure à celle des pattes (40) de la seconde paire.

3. Raccord (10) selon la revendication 1 ou 2, dans lequel les pattes (30) de la première paire ont au niveau de leur raccordement à la partie médiane (32), une épaisseur radiale (E1) qui représente moins de la moitié voire moins d'un tiers d'une épaisseur radiale (E2) des pattes (40) de la seconde paire au niveau de leur raccordement à la partie médiane (32), les épaisseurs radiales (E1, E2) étant mesurées par rapport à l'axe (A) précité.

4. Raccord (10) selon l'une des revendications précédentes, dans lequel chacune des premières dents (42) comprend une face supérieure (42a) plane d'appui sur une face inférieure (44a) plane de chacune des secondes dents (44), les faces supérieures (42a) des dents (42) de la première paire de pattes (30) étant situées dans un même plan (Q) parallèle à l'axe (A).

5. Raccord (10) selon l'une des revendications précédentes, dans lequel les premières dents (42) sont en saillie sur une face d'extrémité (70) de l'épingle (22) qui s'étend sur les pattes (40) de la seconde paire jusqu'à la partie médiane (32).

6. Raccord (10) selon la revendication 5, dans lequel un bossage (90) est en saillie sur la face d'extrémité (70), ce bossage (90) définissant deux bords latéraux (90a) de guidage qui sont situés de part et d'autre dudit axe (A) et qui sont aptes à coopérer par coulissement avec des pistes (92) complémentaires du corps (20) lors du déplacement de l'épingle (22) entre ses positions haute et basse.

7. Raccord (10) selon l'une des revendications précédentes, dans lequel les pattes (30) de la première paire comportent deux premiers crochets (64) qui sont orientés radialement vers l'axe (A) et qui sont aptes à coopérer par appui avec des seconds crochets ou des encoches (62) complémentaires du corps (20) afin d'éviter que l'épingle (22) se déplace de sa position haute à sa position basse sans que les pattes (30) de la première paire soient écartées l'une de l'autre par la nervure (14) de l'embout mâle (12).

8. Raccord (10) selon la revendication 7, dans lequel les premiers crochets (64) sont situés axialement juste en arrière des rampes (34) par rapport à la direction d'engagement de l'embout mâle (12) dans l'embout femelle (18).

9. - Raccord (10) selon la revendication 7 ou 8, dans lequel les premiers crochets (64) sont situés au niveau des saillies de préhension (36).

10. Raccord (10) selon l'une des revendications précédentes, dans lequel les saillies de préhension (36) définissent une largeur maximale (Lmax) de l'épingle22.

11. Raccord (10) selon l'une des revendications précédentes, dans lequel les pattes (40) de la seconde paire comprennent respectivement deux premiers bords incurvés (80) concaves ayant un diamètre (D1) supérieur ou égal à un diamètre externe (D2) de la nervure (14) de l'embout mâle (12), et deux seconds bords incurvés (82) convexes ayant un diamètre inférieur (D3) à ce diamètre externe (D2), les premiers bords (80) étant centrés sur l'axe (A) lorsque l'épingle (22) est en position haute, et les seconds bords (82) étant centrés sur l'axe (A) lorsque l'épingle (22) est en position basse.

12. Raccord (10) selon la revendication 11, dans lequel les seconds bords (82) sont surépaissis axialement par rapport aux premiers bords (80) pour former des saillies axiales (84) du côté des pattes (30) de la première paire.

13. Raccord (10) selon l'une des revendications précédentes, dans lequel l'épingle (22) comprend au moins un élément d'indexage et/ou de guidage apte à coopérer par complémentarité de formes avec un élément complémentaire du corps (20).

14. Raccord (10) selon l'une des revendications précédentes, dans lequel le corps (20) comprend un tronçon tubulaire (20a) et un anneau (20b), l'anneau (20b) étant coaxial au tronçon tubulaire (20a) et relié au tronçon tubulaire (20a) par deux ponts de matière (54, 52) parallèles à l'axe (A) et diamétralement opposés par rapport à cet axe (A), l'épingle (22) étant monté à cheval de part et d'autre des deux ponts de matière (54, 52).

15. Raccord (10) selon l'une des revendications précédentes, dans lequel l'épingle (22) comprend une saillie (94) qui est située en regard d'un creux (96) de forme complémentaire dudit corps (20), cette saillie (94) étant apte à être à distance du creux (96) lorsque l'épingle (22) est dans sa position basse en l'absence d'effort axial appliqué sur l'épingle (22), et étant apte à être engagée dans le creux (96) lorsque l'épingle (22) est dans sa position basse en présence d'un effort axial appliqué sur l'épingle (22).
